# EUROPEAN PATENT SPECIFICATION

(11) **EP 1 575 064 B1**
(45) Date of publication and mention of the grant of the patent: **18.02.2009**
(21) Application number: 05101708.5
(22) Date of filing: 04.03.2005
(51) Int. Cl.: H01C 17/065, H01C 7/04, C04B 35/571, C04B 35/58

(54) **Process for manufacturing ceramic resistors, and ceramic resistors obtained therewith**
Verfahren zur Herstellung keramischer Widerstände und mit diesem Verfahren hergestellt keramische Widerstände
Procédé pour la fabrication de résistances céramiques et résistances céramiques obtenues par celui-ci

(30) Priority: 11.03.2004 IT TO20040161
(43) Date of publication of application: 14.09.2005
(73) Proprietor: Soraru', Gian Domenico, 38050 Povo (Trento) (IT); Sglavo, Vicenzo Maria, 38050 Roncegno (Trento) (IT); Ceschini, Sergio, 38076 Lasino(Trento) (IT)
(72) Inventor: Soraru', Gian Domenico, 38050 Povo (Trento) (IT); Sglavo, Vicenzo Maria, 38050 Roncegno (Trento) (IT); Ceschini, Sergio, 38076 Lasino(Trento) (IT)
(74) Representative: Freyria Fava, Cristina

(56) References cited:
- US-A- 5 635 250
- US-A- 5 961 888
- US-A1- 2003 108 664

## Description

The present invention relates to a new process for manufacturing ceramic resistors.

The manufacture of ceramic resistors concerns different technological and manufacturing spheres, amongst which that of heating elements and of ignitors capable of operating at temperatures of up to 1500°C. For such applications, silicon carbide (SiC) and molybdenum disilicide (MoSi₂) have proved to be suitable materials in so far as they do not present a very high electrical resistance and hence can easily be brought up to incandescence on account of the Joule effect. In addition, they present a good mechanical resistance and resistance to oxidation at high temperatures.

Starting from powders of the above two ceramic materials, it is possible to obtain monolithic elements with different compositions using various technological processes, the most common one of which is that of hot pressing (HP).

Recently, other methods have been developed which enable a material with certain given electrical properties and resistors for high-temperature applications having pre-set shapes and sizes to be obtained more easily than by means of hot pressing.

In particular, the patent US-A-5 961 888 describes conductive ceramic resistors obtained from pyrolysis of pre-ceramic precursors. Said precursors are synthesized starting from compounds with a polymeric structure, such as polysiloxanes or polycarbosilanes, to which there are added in different percentages particles of MoSi₂ or SiC together with other ceramic powders, to obtain finally materials with different values of resistivity. The pre-ceramic precursors thus obtained, which are generally in the form of thermoplastic resins in the solid state at room temperature, are subjected to a process of forming by means of melting, extrusion, or moulding under pressure at high temperature (hot-press moulding) and subsequently to a process of pyrolysis in controlled atmosphere at a high temperature for producing the desired conductive ceramic resistors.

The purpose of the present invention is to provide a process alternative to the ones currently in use for producing conductive ceramic resistors (whatever their value of resistance/conductance may be). In particular, the present invention relates to the production of conductive ceramic resistors starting from silicon alkoxides in which ceramic powders (fillers) of different types are dispersed, amongst which MoSi₂ and SiC powders, exploiting the sol-gel process.

The present invention presents the major advantage of making available a pre-ceramic precursor, which at room temperature is constituted by a sol that is readily pourable into moulds having the desired shape, and subsequently gels giving rise, at the end of the drying process, to a solid object, free from cracks, referred to as "xerogel", which can undergo pyrolysis so as to obtain a conductive ceramic resistor.

Another advantage of the present invention is represented by the high dispersion of the filler in the liquid molecular precursor, which can also lead to the formation of primary (covalent) bonds between the filler and the alkoxide, in contrast to what is described in the patent No. US-A-5 961 888, in which there is the dispersion of the filler in a thermoplastic polymer presumably without formation of said bonds.

A further important advantage of the process according to the present invention lies in the possibility of introducing, into the matrix of oxycarbide glass, cations other than Si, such as for example cations of an element chosen from the group IIIB or the group IVA of the periodic table, preferably B, Ti, Al, and Zr. This result can be achieved by adding, to the silicon alkoxides, soluble compounds of the desired elements, such as inorganic salts or organic compounds, for example alkoxides or, in the case of boron, B(OH)₃. The resulting SiXCO glass - where X is an element chosen from the group IIIB or the group IVA of the periodic table - preferably B, Ti, Al, and Zr - or other suitable elements - presents a high degree of homogeneity, and in particular the metallic cations thus added are dispersed at an atomic level, thanks to the fact that the starting gel is obtained from a solution.

More specifically, the invention relates to a process for producing ceramic resistors having the features set forth in the preamble of claim 1, which is known e.g. from US-A-5 635 250.

According to the invention, the purpose of providing a process alternative to the ones currently in use is achieved by means of a process for producing ceramic resistors having the further features set forth in the characterizing portion of claim 1.

The invention will now be described in detail, purely by way of non-limiting examples wherein processes referred to embodiments of the invention are those falling within the scope of the appended claims. This is made, with reference to the annexed plate of drawings, in which:
- Figure 1 is a photograph obtained at the scanning electron microscope of the microstructure of a specimen of xerogel with 40 vol% of MoSi₂;
- Figure 2 is a photograph obtained with the scanning electron microscope of the microstructure of a specimen with 40 vol% of MoSi₂ pyrolysed up to 1200°C;
- Figure 3 is a graph which represents the conductivity of the specimens with MoSi₂;
- Figure 4 is a graph which represents the conductivity of the specimens with SiC pyrolysed up to 1200°C and that of the specimens with SiC pyrolysed up to 1350°C;
- Figure 5 is a graph which represents the conductivity of the specimens with SiC and MoSi₂ pyrolysed up to 1200°C and that of the specimens with SiC and MoSi₂ pyrolysed up to 1350°C; the conductivity is given as a function of the volumetric fraction of molybdenum disilicide alone; the total content of powders in the specimens is constant and equal to 40 vol%; and
- Figure 6 is a graph that represents the conductivity of the specimens with Al₂O₃ and MoSi₂ pyrolysed up to 1200°C and that of the specimens with Al₂O₃ and MoSi₂ pyrolysed up to 1350°C; the conductivity is given as a function of the volumetric fraction of molybdenum disilicide alone; the total content of powders in the specimens is constant and equal to 40 vol%.

The process according to the present invention envisages the production of ceramic resistors using the sol-gel process, which enables the production of inorganic lattices using silicon alkoxides. Broadly speaking, the process envisages the synthesis of pre-ceramic precursors through: i) a reaction of hydrolysis (in acidic or basic catalysis) of the silicon alkoxides mixed with ceramic powders with formation of a colloidal suspension; ii) subsequent condensation (in acidic or basic catalysis) of the silanol groups with formation of a sol constituted by a siloxanic lattice within which the ceramic particles having the function of fillers are dispersed; iii) filling of moulds with the sol, which is converted into gel for completion of the reactions of condensation; and iv) evaporation of the water/solvent, so that the dry gel is obtained, referred to also as xerogel. The dried specimens thus obtained are subsequently exposed to a controlled pyrolysis environment at temperatures preferably higher than 900°C to obtain the ceramic resistors.

### PREPARATION OF THE SPECIMENS

The process described hereinafter envisages the use of ceramic powders or fillers such as, for example, powders of MoSi₂, SiC or Al₂O₃ and of hybrid silicon alkoxides of the Rₓ-Si(OR¹)₄₋ₓ type, where x = 1, 2 and R = H or a saturated or unsaturated hydrocarbon group having from 1 to 6 carbon atoms in linear or branched chains, as well as possibly substituted cyclic structures, and R¹ corresponds to an alkyl group having from 1 to 4 carbon atoms. By the term "hybrid silicon alkoxides" are meant silicon alkoxides in which Si is bonded both to oxygen atoms (alkoxy groups, Si-O) and directly to carbon atoms (Si-R groups, with R = CH₃, CH₂CH₃, etc.) or hydrogen atoms.

The ceramic powders and the silicon alkoxide are put into a flask, and the mixture thus obtained is stirred with an ultrasound stirrer for approximately thirty minutes so as to favour formation of a suspension of the particles of filler in the liquid reagent.

The suspension is then mixed at 90°C in reflux conditions for approximately 12-14 hours. In this way, the OH groups possibly present on the surface of the particles can react, to form primary chemical bonds between the filler and the alkoxide molecules. Finally, the ceramic powders are homogeneously dispersed and intimately in contact with the liquid.

Next, there is added to the suspension an acidic solution (obtained for example with H₂O and HCl), and mixing is continued for some minutes so that the hydrolysis reactions can take place.

The flask is brought to room temperature using a jet of cold water. Next, there is added therein a basic solution in an amount such as to enable a pH higher than 7 to be obtained and such as to bring about condensation of the system. In some cases, the mixture is brought to room temperature before addition of the acidic solution, and this is generally done when MoSi₂ is present. The subsequent steps (such as, for example, addition of acidic or basic solutions, pouring, drying and pyrolysis) do not undergo any variation.

After some minutes from the addition of the basic solution, a sol is obtained, which is poured into test tubes, containers, or moulds, where it gelled in less than two hours. The moulds may preferably be made of refractory material (for example, a ceramic material) or of a plastic material (for example, polypropylene, polystyrene, polymethylmethacrylate or any other plastic material usable in said field).

The specimens are then left to dry until they loose the liquid present therein. Finally, they assume the form of monolithic xerogels devoid of cracks, inside which the particles of ceramic fillers are homogeneously dispersed.

Through processes of pyrolysis in an inert atmosphere - for example argon, nitrogen, or helium, or even in vacuum conditions - at temperatures equal to or higher than 900°C, the final ceramic material is obtained.

The ceramic materials produced in the way just described consist of a matrix of oxycarbide glass, in which there may be different types of fillers in different amounts.

In the context of the present description, in order to define the composition of the specimens reference will be made for convenience to the volume percentage of the powders dispersed in the dry gel. The total amount of fillers expressed in the way just indicated is maintained within a range from approximately 20 vol% to approximately 40 vol%.

In the step of synthesis, there was exploited the possibility of producing xerogels with ceramic fillers with electrical characteristics very different from one another and in amounts that each time differed. In this way, following upon the treatments of pyrolysis, it was possible to obtain easily ceramic specimens that differed from one another mainly as regards the electrical resistivity or the porosity.

In the examples of ceramic materials that were made, the alkoxide used was methyltriethoxysilane (MTES), the chemical formula of which is CH₃-Si(OEt)₃. In addition, acidic solutions with different pH values were used, all obtained mixing appropriate amounts of distilled water and HCl. The basic solution used was instead a 30% ammoniac solution. During the synthesis, the hydrolysis was conducted by adding 3 mol of acidic solution per mole of MTES, whereas, for the condensation, 1 ml of 30% ammoniac solution was used for each 10 ml of alkoxide.

Given in the examples are the amounts of MTES, fillers and acidic and basic solution necessary for the synthesis of 10 cm³ of gel containing the ceramic fillers. The volume of gel must be calculated excluding the volume of the residual porosity, where by this term is meant the typical porosity of gel/xerogel specimens, which can be easily measured, for example, via techniques of N₂ adsorption (BET method).

The sol was poured into polystyrene test tubes, inside which the gel that was formed was dried for a week in air and for seven days in an oven at 60°C.

In the various cases presented, all the specimens underwent conversion from xerogel to ceramic through a first heat treatment at 900°C; some of them were then treated at 1200°C, others at 1350°C. Baking always occurred in flow of argon, and the rate of heating adopted was 5°C/min for the first treatment and 10°C/min for the second.

To synthesize, for example, 10 cm³ of gel with 40 vol% of MoSi₂ there were used 25.24 g of powder with a mean grain size of approximately 2 µm and methyltriethoxysilane in an amount of 21.3 ml, equivalent to 19.06 g (density of MTES = 0.895 g/ml), equivalent to 106.9 mmol of MTES (MW = 178.304). After hydrolysis and condensation, there were formed 106.9 mmol of gel with composition CH₃SiO_{1.5}, which have a molecular weight of 67.12, equivalent to 7.18 g. Considering a density of the gel of 1.2 g/ml, it is possible to calculate the amount in millilitres of hybrid silica gel with composition CH₃SiO_{1.5}, which is found to be 5.99 ml, i.e., approximately 6 ml. The remaining 4 ml are occupied by the particles of MoSi₂; in fact, 25.24 g with a density of 6.31 g/ml correspond to approximately 4 ml.

After reflux stirring at 90°C, the filler-MTES suspension was cooled down to room temperature, and there were added thereto 5.8 ml of solution with pH 3.6 and, after 10 minutes, 2.1 ml of 30% ammoniac solution. After some minutes, the compound still liquid (sol) was poured into test tubes where it gelled in 20-30 minutes. The drying and pyrolysis of the specimens were carried out according to the modalities described previously.

For specimens with 30 vol% of MoSi₂ the same procedure was followed, using 18.92 g of powder and 24.9 ml of MTES for the suspension, 6.8 ml of solution with pH 2.6 for the hydrolysis and 2.5 ml of 30% ammoniac solution for the condensation.

For specimens with 20 vol% of MoSi₂ (10 cm³ of gel) the same procedure as for the two previous cases was followed, using 12.62 g of powder and 28.5 ml of MTES for the suspension, 7.7 ml of solution with pH 1.6 and 2.8 ml of 30% ammoniac solution.

Passing now to the ceramics containing silicon carbide, described hereinafter is the procedure for producing the specimen with 40 vol% of this filler. The synthesis of the gel can be conducted using 12.64 g of hexagonal α-SiC in powder form with a mean grain size of approximately 0.8 µm and MTES in an amount of 21.3 ml. After reflux stirring at 90°C, to the filler-MTES suspension there are added 5.8 ml of solution with pH 1. After 10 minutes, the product is cooled down to room temperature, and 2.1 ml of ammoniac solution are added. After some minutes, the compound, still in the liquid state, is poured into test tubes where it gels in less than an hour. Drying and pyrolysis of the specimens occurs according to the modalities described previously.

For specimens with 30 vol% of SiC the same procedure is followed, using 9.48 g of powder and 24.9 ml of MTES for the suspension, 6.8 ml of solution with pH 1 for the hydrolysis, and 2.5 ml of 30% ammoniac solution.

For specimens with 20 vol% of SiC (10 cm³ of gel) a procedure similar to that of the two previous cases is followed, using 6.32 g of powder and 28.4 ml of MTES for the suspension, 7.7 ml of solution with pH 1.6 for the hydrolysis and 2.8 ml of 30% ammoniac solution.

As has already been said previously, it is possible to obtain ceramic specimens with compositions that envisage the use of a number of ceramic powders. For example, it is possible to synthesise and pyrolyse monolithic gels containing MoSi₂ and SiC or else MoSi₂ and Al₂O₃.

The synthesis of specimens with 20 vol% of MoSi₂ and 20 vol% of SiC was made starting from 21.3 ml of MTES and 2 cm³ of both types of fillers (i.e., with 6.32 g of SiC and 12.62 g of MoSi₂).

The subsequent process, including the amounts of acidic and basic solutions to be added, is the same as the one described in the case with 40 vol% of MoSi₂ but for the fact that now for the process of hydrolysis a pH value of 2.6 is used.

A gel having a different composition can be synthesized by adding to 21.3 ml of MTES 9.48 g of SiC and 6.31 g of MoSi₂ and causing the reactions of hydrolysis to occur at 60°C with 5.8 ml of solution with pH 2 and the condensation at room temperature with 2.1 ml of 30% ammoniac solution. The xerogel obtained after drying contains 10% of MoSi₂ and 30% of SiC. In order to have the percentages of the two fillers reversed, it is sufficient to start from a mixture formed by the same amount of MTES in which 3.16 g of SiC and 18.93 g of MoSi₂ are dispersed. Now, hydrolysis is conducted at room temperature with 5.8 ml of a solution with pH 5, whilst, as regards condensation, nothing changes with respect to the previous case.

There were also produced specimens containing: 20 vol% of MoSi₂ and 20 vol% of Al₂O₃, 10% of MoSi₂ and 30 vol% of Al₂O₃, 30 vol% of MoSi₂ and 10 vol% of Al₂O₃.

Synthesis of the specimens is exactly the same as for the specimens with the same percentages of molybdenum disilicide and silicon carbide in powder form, where the latter is replaced by appropriate amounts of alumina particles. In particular, the alumina powder used has a mean grain size of approximately 1.2 µm, a density of 3.97 g/cm³ and a purity of 99.8%. For the specimen with 20 vol% of MoSi₂ and 20 vol% Al₂O₃, 7.94 g of alumina are necessary, for the specimen with 10 vol% of MoSi₂ and 30 vol% Al₂O₃, 11.91 g of alumina are necessary, whereas for the specimen with 30 vol% MoSi₂ and 10 vol% Al₂O₃, 3.97 g of alumina are necessary.

### SiBOC VITREOUS-MATRIX CERAMIC

Electrically conductive ceramic materials were obtained, similar to the ones referred to previously but having a vitreous matrix in which, in addition to carbon, also boron is present, i.e., a SiBOC-glass matrix.

To introduce boron into the oxycarbide glass, boric acid was used in the synthesis step, causing it to dissolve in the starting alkoxide. The ceramic fillers were added as soon as dissolution of the boric acid (in the solution just obtained) was complete. Then ultrasound mixing and reflux stirring were carried out in a way identical to the procedure adopted in the method of synthesis explained previously.

The synthesis then proceeds with the addition of distilled water for hydrolysis and subsequently of the 30% ammoniac solution to bring about the condensation reactions. In this case, acidic solutions are not used for catalysing the reactions of hydrolysis.

The processes of drying and pyrolysis which are conducted after gelling do not undergo any variation with respect to what was described previously.

In this way, a specimen with 20 vol% of MoSi₂ was for example obtained by synthesising 10 cm³ of gel (always excluding the residual porosity from the calculation of the volume) using as alkoxide methyltriethoxysilane in an amount of 28.5 ml; this reagent was put into a flask together with 0.442 g of B(OH)₃ (boric acid) in powder form, and the mixture obtained was subjected to reflux stirring at 70°C for approximately 3 hours. The B/Si atomic ratio is 0.05. When the 3 hours had elapsed, the boric acid was completely dissolved in the MTES. The solution was cooled to room temperature and 12.62 g of MoSi₂ in powder form were added thereto. After performing ultrasound mixing to favour dispersion of the filler, the mixture was again subjected to reflux stirring at 90°C for 12-14 hours and then cooled again to room temperature using a jet of cold water. An amount of 7.7 ml of distilled water was then added to the mixture for hydrolysis, and, after 10 minutes, 2.8 ml of ammoniac solution were added, with which the reactions of hydrolysis were catalysed. After pouring the product into a test tube, drying and pyrolysis of the specimens was carried out to obtain the final ceramic material.

### PROPERTIES OF THE MATERIALS

The materials obtained were observed at the scanning electron microscope (SEM) to evaluate the microstructure thereof. Instead, with densimetric tests and electrical measurements it was possible to find their porosity and resistivity, whilst x-ray diffractometric analyses revealed the phases present.

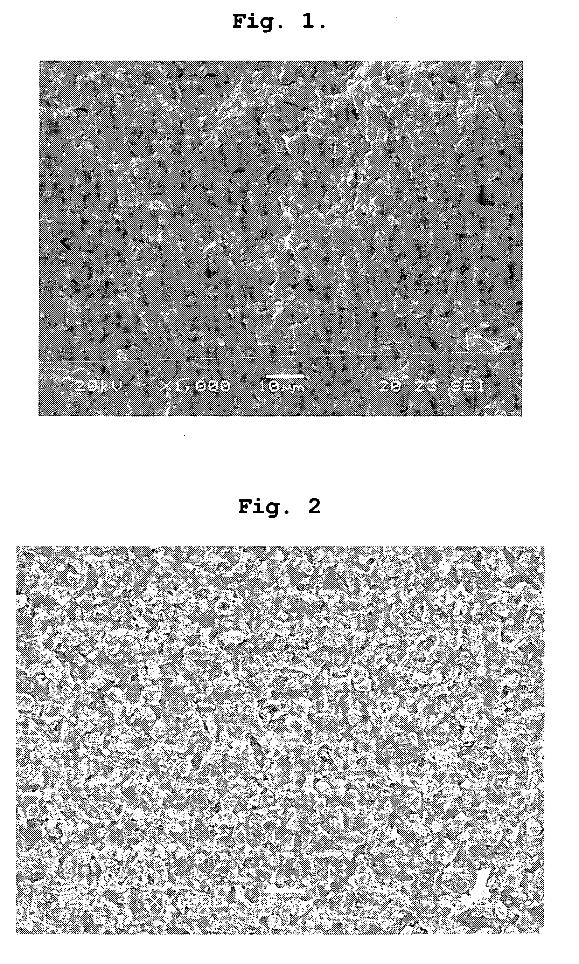

Figures 1 and 2 provide images obtained with the SEM, which exemplify the microstructural characteristics of the gel and of the ceramics produced.

Figure 1 shows an image obtained with the SEM at 1000X of the fracture surface of a gel specimen with 40 vol% of MoSi₂. The filler is recognizable from the grey colour which is lighter than the surrounding matrix. From the image it may be noted how the particles of molybdenum disilicide are homogeneously dispersed within a polymethylsiloxane matrix obtained through the reactions of hydrolysis and condensation of the methyltriethoxysilane typical of the sol-gel process.

The microstructure of the gel specimens of various compositions is similar to that of Figure 1. As compared to the latter the main differences regard the type or density of the particles of filler in the matrix.

Figure 2 shows an image obtained with the SEM at 1000X of the polished surface of a specimen with 40 vol% of MoSi₂ pyrolysed up to 1200°C. As in Figure 1, the matrix presents a darker grey than do the MoSi₂ particles and consists of oxycarbide glass and free carbon. From the image there may also be noted open porosity dispersed rather homogeneously on the surface of the specimen.

The microstructure of the ceramic specimens of different compositions and treated at different temperatures differ from one another mainly as regards the type and density of filler in the matrix and as regards the amount of porosity. In any case, they maintain a fundamental resemblance with what is illustrated in Figure 2.

As mentioned previously, x-ray diffractometry analyses were carried out on the ceramic specimens. In addition, for each type of material, the electrical resistivity, the geometrical density and the apparent density were determined. From the two types of densimetric data, it was possible to estimate the open porosity for the various specimens, the value of which is given together with that of the geometrical density.

The results of all the diffractometric, electrical and densimetric analyses will appear in the review of the various types of ceramics produced.

The specimens with 40 vol% of MoSi₂ treated up to 1200°C and up to 1350°C contain, in addition to oxycarbide glass and to the filler, also other three crystalline phases, which are formed during the pyrolysis of the gel: Mo₅Si₃, Mo_{4.8}Si₃C_{0.6}, and β-SiC. If the temperature of the final heat treatment is brought from 1200°C to 1350°C, the geometrical density of the material passes from 2.72 g/cm³ to 3.61 g/cm³, whilst the open porosity drops from 19.6% to 15%. The conductivity of the material treated up to 1200°C is 5.26E-1 (Ω cm)⁻¹, and with a pyrolysis up to 1350°C is 3.5E1 (Ω cm)⁻¹.

The specimens with 30 vol% and 20 vol% of MoSi₂ treated at 1200°C and at 1350°C have the same phases present in the specimen pyrolysed at the same temperatures with 40 vol% of the same filler.

The density of the specimen with 30 vol% of MoSi₂ pyrolysed up to 1200°C is 2.57 g/cm³, the porosity is 20.8%, whilst the conductivity is 1.36E-1 (Ω cm)⁻¹. The material obtained following upon a pyrolysis at 1350°C has a density of 3.54 g/cm³, a porosity of 14.9%, and a conductivity of 4.06E1 (Ω cm)⁻¹.

As regards the specimen with 20 vol% of MoSi₂ treated up to 1200°C, there were found a density of 2.5 g/cm³, a porosity of 10.3%, and a conductivity of 2.82E-6 (Ω cm)⁻¹. If the heat treatment of the gel with 20 vol% of MoSi₂ is brought up to 1350°C, a ceramic is obtained having a density of 3.25 g/cm³, a porosity of 5.7%, and a conductivity of 4.13E1 (Ω cm)⁻¹.

The specimens with 40 vol%, 30 vol% and 20 vol% of SiC pyrolysed up to 1200°C and up to 1350°C, following upon the x-ray diffractometric analyses, do not present new phases other than the filler and the oxycarbide glass of which they are constituted.

The specimen with 40 vol% of SiC treated up to 1200°C had a density of 1.39 g/cm³, a porosity of 50.8%, and a conductivity of 1.05E-9 (Ω cm)⁻¹. The gel with 40 vol% of SiC pyrolysed up to 1350°C gave rise to a ceramic material with a density of 1.3 g/cm³, a porosity of 55.2%, and an electrical conductivity of 1.63E-8 (Ω cm)⁻¹.

The density of the specimen with 30 vol% of SiC pyrolysed up to 1200°C was 1.46 g/cm³, the porosity was 44.9%, whilst the conductivity was 1.45E-9 (Ω cm)⁻¹. The ceramic obtained following upon a pyrolysis up to 1350°C of the gel with 30 vol% of SiC had a density of 1.41 g/cm³, a porosity of 51.8%, and a conductivity of 3.82E-8 (Ω cm)⁻¹.

As regards the specimen with 20 vol% of SiC treated up to 1200°C, there were found a density of 1.83 g/cm³, a porosity of 29.6%, and a conductivity of 1.11E-9 (Ω cm)⁻¹. If the heat treatment of the gel with 20 vol% of SiC is brought up to 1350°C, a ceramic is obtained having a density of 1.63 g/cm³, a porosity of 35.9%, and a conductivity of 3.74E-6 (Ω cm)⁻¹.

The ceramic specimens containing both SiC and MoSi₂ treated up to 1200°C and up to 1350°C, had within them all the phases already encountered in the specimens with just one of these two types of fillers. As regards the properties of density, conductivity, and porosity, they varied according to the proportions of SiC and MoSi₂ added to the starting silicon alkoxide in the step of synthesis and, as in the previous cases, also according to the maximum temperature of pyrolysis. For example, the specimen with 30 vol% of SiC and 10 vol% MoSi₂ treated up to 1200°C had a density of 1.74g/cm³, a porosity of 40 vol%, and a conductivity of 1.12E-9 (Ω cm)⁻¹. The specimen containing the same fillers but treated up to 1350°C had a density of 1.83 g/cm³, a porosity of 43.4%, and a conductivity of 1.76E-8 (Ω cm)⁻¹.

The specimen with 20 vol% MoSi₂ and 20 vol% of SiC pyrolysed up to 1200°C had a density of 2.11 g/cm³, a porosity of 29.1%, and a conductivity of 9.43E-9 (Ω cm)⁻¹. If the gel with 20 vol% of MoSi₂ and 20 vol% of SiC is treated up to 1350°C, a ceramic material is obtained having a density of 2.41 g/cm³, a porosity of 33%, and a conductivity of 1.31E-1 (Ω cm)⁻¹.

The specimen with 10 vol% of SiC and 30 vol% of MoSi₂ treated up to 1200°C had a density of 2.48 g/cm³, a porosity of 22.8%, and a conductivity of 2.89E-4 (Ω cm)⁻¹. The specimen containing the same fillers but pyrolysed up to 1350°C had a density of 3.15 g/cm³, a porosity of 21%, and a conductivity of 2.65 (Ω cm)⁻¹.

The other specimens the process of synthesis of which has been described and some properties of which will now be presented, are the ones containing alumina and molybdenum disilicide, the compositions of which recall in terms percentages of filler the materials that have just been referred to.

The x-ray diffraction analyses conducted on the ceramics treated up to 1200°C revealed the presence, in addition to the two types of filler and of the vitreous phase, also of compounds such as Mo₅Si₃, Mo_{4.8}Si₃C_{0.6}, and β-SiC which were already present in the specimens with MoSi₂ alone. With a pyrolysis of up to 1350°C, also cristobalite was formed, the presence of which has never been encountered in the specimens treated at the same temperature so far described.

The specimen with 30 vol% of Al₂O₃ and 10 vol% of MoSi₂ treated up to 1200°C had a density of 2.49 g/cm³, a porosity of 30.6%, and a conductivity of 1.7E-8 (Ω cm)⁻¹. The specimen containing the same fillers but pyrolysed up to 1350°C had a density of 2.67 g/cm³, a porosity of 25.8%, and an electrical conductivity of 2.3E-4 (Ω cm)⁻¹.

The ceramic with 20 vol% of MoSi₂ and 20 vol% of Al₂O₃ treated up to 1200°C had a density of 2.62 g/cm³, a porosity of 30.1%, and a conductivity of 1.1E-1 (Ω cm)⁻¹. The gel with 20 vol% of MoSi₂ and 20 vol% Al₂O₃ treated up to 1350°C gave rise to a ceramic material with a density of 3.16 g/cm³, a porosity of 18.2%, and a conductivity of 4.4 (Ω cm)⁻¹.

The specimen with 10 vol% of Al₂O₃ and 30 vol% MoSi₂ pyrolysed up to 1200°C had a density of 2.77 g/cm³, a porosity of 31.4%, and a conductivity of 3.1 (Ω cm)⁻¹. The specimen with 10 vol% of Al₂O₃ and 30 vol% MoSi₂ treated up to 1350°C had a density of 3.54 g/cm³, a porosity of 13.3%, and a conductivity of 1.3E1 (Ω cm)⁻¹.

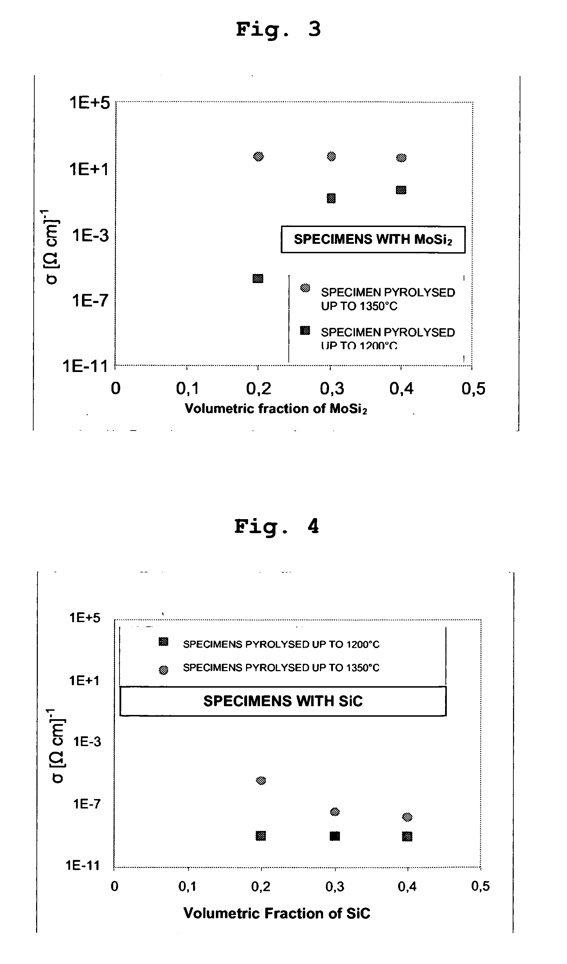

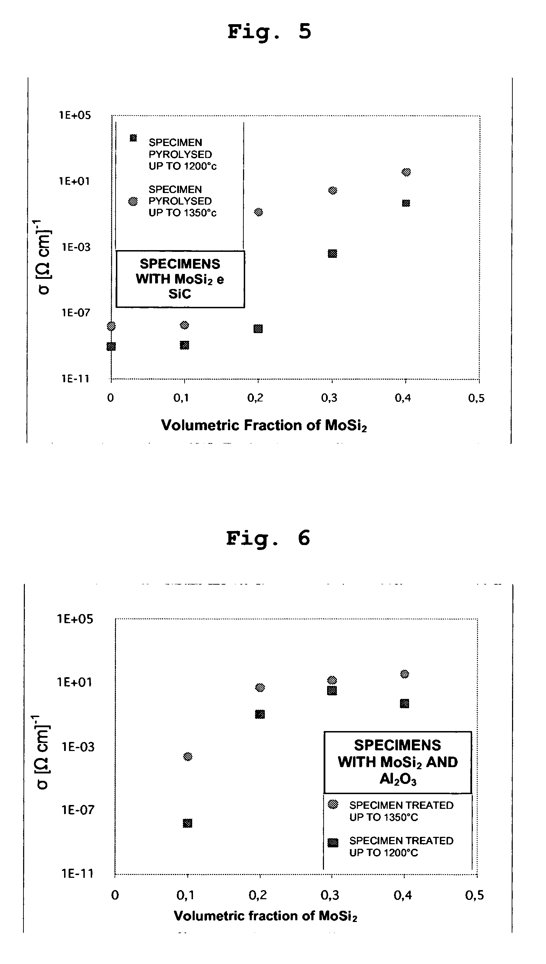

The graphs of Figures 3 and 6 give the values of electrical conductivity referred to the ceramic specimens treated at 1200°C and at 1350°C as a function of the quantity of SiC and MoSi₂, respectively. For the specimens with a number of types of fillers, to which Figures 4 and 5 refer, the conductivity is given as a function of the amount of molybdenum disilicide. The amount of filler appearing on the abscissa of each graph refers - as already specified previously - to the volumetric fraction referred to the dry gel. From Figures 3 to 6 it may be noted that, for all types of ceramic specimens, the conductivity increases as the temperature of pyrolysis increases.

The SiBOC-based specimen pyrolysed up to 1350°C had a density of 3.39 g/cm³, a porosity of 2%, and a conductivity of 1.69E1 (Ω cm)⁻¹. This specimen was characterized by a very low porosity. However, the conductivity was found to be slightly less than that of the specimen with 20 vol% of MoSi₂ treated up to 1350°C and synthesized without the use of boric acid. The x-ray diffraction analysis highlighted the formation of the same crystalline phases found in the specimen with 20 vol% of MoSi₂ obtained without the addition of boric acid.

Of course the details of implementation and the embodiments may vary with respect to what is described and illustrated herein, without thereby departing from the scope of the invention, according to the appended claims.

## Claims

1. A process for producing ceramic resistors comprising the steps of producing, within the framework of a sol-gel process, a sol obtained using at least one silicon alkoxide and at least one ceramic powder and exposing the resulting gel to a pyrolysis environment, **characterized in that** said at least one silicon alkoxide has the general formula:
Rₓ-Si(OR¹)₄₋ₓ
where:
x = 1 or 2;
R is a saturated or unsaturated hydrocarbon group having from 1 to 6 carbon atoms in linear or branched chains, as well as possibly substituted cyclic structures; and
R¹ is an alkyl group having from 1 to 4 carbon atoms.

2. The process according to claim 1, **characterized in that** said process comprises pouring into moulds said sol and exposing said moulds thus loaded to a pyrolysis environment.

3. The process according to Claim 1, in which said at least one silicon alkoxide is selected from the group constituted by CH₃-Si(OEt)₃, CH₃-Si(OMe)₃, CH₃CH₂-Si(OEt)₃, CH₃CH2-Si(OMe)₃, CH₂CH-Si(OEt)₃, and Vinyl-Si(OEt)₃.

4. The process according to Claim 1, in which said at least one ceramic powder is selected from the group constituted by MoSi₂, SiC, Al₂O₃, Si₃N₄, BN, TiC, SiO₂, TiN, B₄C, CrSi₂, ZrO₂ A1N, and TiO₂

5. The process according to any one of the preceding claims, in which said sol-gel process comprises a reaction of hydrolysis of said at least one silicon alkoxide, preferably in acidic catalysis, with formation of silanol groups.

6. The process according to any one of the preceding claims, in which said sol-gel process comprises a reaction of condensation of said silanol groups in basic catalysis with formation of said sol.

7. The process according to any one of the preceding claims, in which said sol poured into said moulds is transformed into a gel.

8. The process according to Claim 7, in which said gel is subjected to a drying process.

9. The process according to Claim 8, in which said gel is a monolithic xerogel, substantially free from cracks.

10. The process according to Claim 7, Claim 8, or Claim 9, in which said gel, possibly extracted from said moulds, is subjected to at least one treatment of pyrolysis in inert atmosphere at a temperature of pyrolysis higher than 900°C.

11. The process according to Claim 10, in which said temperature of pyrolysis is higher than 1100°C, preferably higher than 1200°C, and even more preferably higher than 1300°C.

12. The process according to Claim 10, in which said temperature of pyrolysis is higher than 1350°C, preferably higher than 1400°C, and even more preferably higher than 1450°C.

13. The process according to Claim 1, in which said at least one ceramic powder is present in a volume percentage of between 20 vol% and 40 vol% with respect to the hybrid silica gel (CH₃-SiO_{1.5})/ceramic powder solid mixture, where said mixture does not comprise the residual porosity.

14. The process according to Claim 1, in which said ceramic powder has a grain size of less than 10 µm.

15. The process according to Claim 14, in which said ceramic powder has a grain size of less than 5 µm.

16. The process according to Claim 14, in which said ceramic powder has a grain size comprised between 0.1 µm and 10 µm.

17. The process according to Claim 4, in which said ceramic powder is formed by a mixture of MoSi₂ and SiC.

18. The process according to Claim 4, in which said ceramic powder is formed by a mixture of MoSi₂, SiC and/or Al₂O₃.

19. The process according to any one of the preceding claims, in which said ceramic powder contains a further insulating agent and/or semiconductor agent.

20. The process according to Claim 1, in which added to said at least one silicon alkoxide is an organic or inorganic compound of an element chosen from the group IIIB or the group IVA of the periodic table.

21. The process according to Claim 20, in which said element is selected from the group constituted by B, A1, Ti, and Zr.

22. The process according to Claim 20, in which said organic compound is an alkoxide.

23. The process according to Claim 20, in which said compound is B(OH)₃.

24. The process according to Claim 20 or Claim 21, in which the amount of B, expressed as atomic ratio B/Si, is comprised between 0.01 and 0.5.

25. A ceramic resistor obtainable with the process according to any one of Claims 1 to 24.

## Patentansprüche

1. Verfahren zur Herstellung von Keramikwiderständen, umfassend die Schritte des Herstellens eines unter Verwendung von mindestens einem Siliciumalkoxid und mindestens einem Keramikpulver erhaltenen Sols im Rahmen eines Sol-Gel-Verfahrens und Aussetzen des erhaltenen Gels einer Pyrolyseumgebung, **dadurch gekennzeichnet, dass** das mindestens eine Siliciumalkoxid die allgemeine Formel
Rₓ-Si(OR¹)₄₋ₓ
aufweist, wobei
x = 1 oder 2;
R für eine gesättigte oder ungesättigte Kohlenwasserstoffgruppe mit 1 bis 6 Kohlenstoffatomen in linearen oder verzweigten Ketten, sowie möglicherweise substituierten cyclischen Strukturen steht; und
R¹ für eine Alkylgruppe mit 1 bis 4 Kohlenstoffatomen steht.

2. Verfahren nach Anspruch 1, **dadurch gekennzeichnet, dass** das Verfahren das Gießen des Sols in Gussformen und Aussetzen der so beladenen Gussformen einer Pyrolyseumgebung umfasst.

3. Verfahren nach Anspruch 1, wobei das mindestens eine Siliciumalkoxid ausgewählt ist aus der Gruppe, die zusammengesetzt aus CH₃-Si(OEt)₃, CH₃-Si(OMe)₃, CH₃CH₂-Si(OEt)₃, CH₃CH₂-Si(OMe)₃, CH₂CH-Si(OEt)₃ und Vinyl-Si(OEt)₃.

4. Verfahren nach Anspruch 1, wobei das mindestens eine Keramikpulver ausgewählt ist aus der Gruppe, zusammengesetzt aus MoSi₂, SiC, Al₂O₃, Si₃N₄, BN, TiC, SiO₂, TiN, B₄C, CrSi₂, ZrO₂, AlN und TiO₂.

5. Verfahren nach einem der vorangehenden Ansprüche, wobei das Sol-Gel-Verfahren eine Hydrolysereaktion des mindestens einen Siliciumalkoxids vorzugsweise in saurer Katalyse unter Bildung von Silanolgruppen umfasst.

6. Verfahren nach einem der vorangehenden Ansprüche, wobei das Sol-Gel-Verfahren eine Kondensationsreaktion der Silanolgruppen in basischer Katalyse unter Bildung des Sols umfasst.

7. Verfahren nach einem der vorangehenden Ansprüche, wobei das in die Gussformen gegossene Sol zu einem Gel umgewandelt wird.

8. Verfahren nach Anspruch 7, wobei das Gel einem Trocknungsverfahren unterzogen wird.

9. Verfahren nach Anspruch 8, wobei es sich bei dem Gel um ein monolithisches Xerogel handelt, das im Wesentlichen frei von Rissen ist.

10. Verfahren nach Anspruch 7, Anspruch 8 oder Anspruch 9, wobei das möglicherweise aus den Gussformen extrahierte Gel mindestens einer Pyrolysebehandlung in inerter Atmosphäre bei einer Pyrolysetemperatur von höher als 900°C unterzogen wird.

11. Verfahren nach Anspruch 10, wobei die Pyrolysetemperatur höher als 1100°C, vorzugsweise höher als 1200°C und noch stärker bevorzugt höher als 1300°C ist.

12. Verfahren nach Anspruch 10, wobei die Pyrolysetemperatur höher als 1350°C, vorzugsweise höher als 1400°C und noch stärker bevorzugt höher als 1450°C ist.

13. Verfahren nach Anspruch 1, wobei das mindestens eine Keramikpulver in einem Volumenprozentanteil zwischen 20 Vol.-% und 40 Vol.-% in Bezug auf das hybride Silicagel vorliegt (CH₃-SiO₁,₅)/Keramikpulver-Feststoffgemisch, wobei das Gemisch die Restporosität nicht umfasst.

14. Verfahren nach Anspruch 1, wobei das Keramikpulver eine Korngröße von weniger als 10 µm aufweist.

15. Verfahren nach Anspruch 14, wobei das Keramikpulver eine Korngröße von weniger als 5 µm aufweist.

16. Verfahren nach Anspruch 14, wobei das Keramikpulver eine Korngröße aufweist, die zwischen 0,1 µm und 10 µm liegt.

17. Verfahren nach Anspruch 4, wobei das Keramikpulver durch ein Gemisch aus MoSi₂ und SiC gebildet wird.

18. Verfahren nach Anspruch 4, wobei das Keramikpulver durch ein Gemisch aus MoSi₂, SiC und/oder Al₂O₃ gebildet wird.

19. Verfahren nach einem der vorangehenden Ansprüche, wobei das Keramikpulver ein weiteres Isolierungsmittel und/oder Halbleitermittel enthält.

20. Verfahren nach Anspruch 1, wobei dem mindestens einen Siliciumalkoxid eine organische oder anorganische Verbindung eines Elements, ausgewählt aus der Gruppe IIIB oder der Gruppe IVA des Periodensystems, zugesetzt wird.

21. Verfahren nach Anspruch 20, wobei das Element ausgewählt ist aus der Gruppe, zusammengesetzt aus B, Al, Ti und Zr.

22. Verfahren nach Anspruch 20, wobei es sich bei der organischen Verbindung um ein Alkoxid handelt.

23. Verfahren nach Anspruch 20, wobei es sich bei der Verbindung um B(OH)₃ handelt.

24. Verfahren nach Anspruch 20 oder Anspruch 21, wobei die Menge an B, ausgedrückt als Atomverhältnis B/Si, zwischen 0,01 und 0,5 liegt.

25. Keramikwiderstand, der durch das Verfahren nach einem der Ansprüche 1 bis 24 erhältlich ist.

## Revendications

1. Un processus de production de résistances céramique comprenant les étapes de production, dans le cadre d'un processus sol-gel, d'un sol obtenu en utilisant au moins un alcoxyde de silicium et au moins une poudre céramique, et d'exposition du gel résultant à un environnement de pyrolyse, **caractérisé en ce que** ledit au moins un alcoxyde de silicium a la formule général :
Rₓ-Si(OR¹)₄₋ₓ
où :
x vaut 1 ou 2 ;
R est un groupe hydrocarbure saturé ou insaturé ayant de 1 à 6 atomes de carbone en chaînes linéaires ou ramifiées, ainsi qu'éventuellement des structures cycliques substituées ; et
R¹ est un groupe alkyle ayant de 1 à 4 atomes de carbone.

2. Le processus selon la revendication 1, **caractérisé en ce que** ledit processus comprend le versement dans des moules dudit sol et l'exposition desdits moules ainsi chargés à un environnement de pyrolyse.

3. Le processus selon la revendication 1, dans lequel ledit au moins un alcoxyde de silicium est choisi dans le groupe formé par CH₃-Si(OEt)₃, CH₃-Si(OMe)₃, CH₃CH₂-Si(OEt)₃, CH₃CH₂-Si(OMe)₃, CH₂CH-Si(OEt)₃ et vinyl-Si(OEt)₃.

4. Le processus selon la revendication 1, dans lequel ladite au moins une poudre de céramique est choisie dans le groupe formé par MoSi₂, SiC, Al₂O₃, Si₃N₄, BN, TiC, SiO₂, TiN, B₄C, CrSi₂, ZrO₂, AlN et TiO₂.

5. Le processus selon l'une des revendications précédentes, dans lequel ledit processus sol-gel comprend une réaction d'hydrolyse dudit au moins un alcoxyde de silicium, de préférence en catalyse acide, avec formation de groupes silanol.

6. Le processus selon l'une des revendications précédentes, dans lequel ledit processus sol-gel comprend une réaction de condensation desdits groupes silanol en catalyse basique avec formation dudit sol.

7. Le processus selon l'une des revendications précédentes, dans lequel ledit sol versé dans lesdits moules est transformé en un gel.

8. Le processus selon la revendication 7, dans lequel ledit gel est soumis à un processus de séchage.

9. Le processus selon la revendication 8, dans lequel ledit gel est un xérogel monolithique, substantiellement dépourvu de craquelures.

10. Le processus selon la revendication 7, la revendication 8 ou la revendication 9, dans lequel ledit gel, éventuellement extrait desdits moules, est soumis à au moins un traitement de pyrolyse en atmosphère inerte à une température de pyrolyse supérieure à 900°C.

11. Le processus selon la revendication 10, dans lequel ladite température de pyrolyse est supérieure à 1100°C, de préférence supérieure à 1200°C, et encore plus préférentiellement supérieure à 1300°C.

12. Le processus selon la revendication 10, dans lequel ladite température de pyrolyse est supérieure à 1350°C, de préférence supérieure à 1400°C, et encore plus préférentiellement supérieure à 1450°C.

13. Le processus selon la revendication 1, dans lequel ladite au moins une poudre céramique est présente en un pourcentage volumique compris entre 20 % en volume et 40 % en volume par rapport au gel de silice hybride (CH₃-SiO_{1,5})/poudre céramique en mélange solide, où ledit mélange ne comprend pas la porosité résiduelle.

14. Le processus selon la revendication 1, dans lequel ladite poudre céramique présente une taille de grain inférieure à 10 µm.

15. Le processus selon la revendication 14, dans lequel ladite poudre céramique présente une taille de grain inférieure à 5 µm.

16. Le processus selon la revendication 14, dans lequel ladite poudre céramique présente une taille de grain comprise entre 0,1 µm et 10 µm.

17. Le processus selon la revendication 4, dans lequel ladite poudre céramique est formée par un mélange de MoSi₂ et de SiC.

18. Le processus selon la revendication 4, dans lequel la dite poudre céramique est formée par un mélange de MoSi₂, de SiC et/ou de Al₂O₃.

19. Le processus selon l'une des revendications précédentes, dans lequel ladite poudre céramique contient un autre agent isolant et/ou agent semi-conducteur.

20. Le processus selon la revendication 1, dans lequel est ajouté audit au moins un alcoxyde de silicium un composé organique ou inorganique d'un élément choisi dans le groupe IIIb ou dans le groupe IVa du tableau périodique.

21. Le processus selon la revendication 20, dans lequel ledit élément est choisi dans le groupe formé par B, Al, Ti et Zr.

22. Le processus selon la revendication 20, dans lequel ledit composé organique est un alcoxyde.

23. Le processus selon la revendication 20, dans lequel ledit composé est B(OH)₃.

24. Le processus selon la revendication 20 ou la revendication 21, dans lequel la quantité de B, exprimée sous forme de ratio atomique B/Si, est comprise entre 0,01 et 0,5.

25. Une résistance céramique susceptible d'être obtenue par le processus selon l'une des revendications 1 à 24.
